# EUROPEAN PATENT APPLICATION

(11) **EP 2 868 193 A1**
(43) Date of publication of application: **06.05.2015**
(21) Application number: 14191970.4
(22) Date of filing: 05.11.2014
(51) Int. Cl.: A01K 97/00

(54) **Fishing rig tester**

(30) Priority: 05.11.2013 GB 201319550
(71) Applicant: Rubicon Innovations Limited, Folkestone, Kent CT19 6BE (GB)
(72) Inventor: Bernett, Reuben, Folkestone, Kent CT19 6AZ (GB); Dosdson, Mark, Folkestone, Kent CT19 6BE (GB)
(74) Representative: Boxall, Sarah Jane

(57) **Abstract**

A fishing rig testing device (1) and kit of parts comprising a plunger (2), a water reservoir (3) having an open end (3b) for the ingress and egress of water, and a plasticised moulding (4) at the open end (3b) of the water reservoir. In use, the device mimics the inhalation and exhalation of a fish and allows the suitability of a fishing rig to be tested.

## Description

The present invention relates to a device for testing the ability and efficacy of a fishing rig to catch a fish.

It is no secret that fishermen around the world spend a lot of money on their sport, although few fishermen admit how much they have actually spent! All their spend is aimed at giving them an advantage over their fellow anglers and the prestige of catching bigger fish in larger quantities.

If two anglers used the same bait and rods on the same lake on the same day, the remaining variable to differentiate the success of one from the other could be the effectiveness of the rigs. If a rig is ineffective a fish could have had the hook in its mouth and moved on without the hook embedding in the lip or, as anglers would say, "the fish got away with it".

A fishing 'rig' is the combination of bait, lead weights, hook and fishing line. It may be assembled of one or more lines, hooks, sinkers, floats, swivels, beads, and other fishing tackle. A rig might be held by a rod, by hand, by bankside equipment such as rod rests and rod pods, or attached to a boat or pier. Some rigs are designed to float near the surface of the water, some in mid-water while others are designed to sink to the bottom. Many rigs are designed especially for catching a single species of fish.

There are thousands of rig permutations, some of which are commonly used and have been given a name. Some are specific to an angler and have been honed over the years. Even if two anglers used the same type of rig, they are still likely to be very different due to the 'flavour' of bait, the type of hook, the type of line, position of the weights, using it in a gravel lake or a sand lake, different water temperature etc. This is not a comprehensive list of variables, but it should now be clear why there are so many permutations. Carp anglers, in particular, will try many different rigs in an attempt to land a record-breaking fish.

To test a rig, the average angler will do a rudimentary 'palm test' by pulling their rig over the palm of their hand to see if the hook turns and is embedded into the heel of their hand. Clearly the palm test ignores the impact of water and so it is not realistic. Specifically the palm test will not show how a rig is likely to react underwater when a fish inhales and exhales the rig. However, to date, there is no other way to test the suitability and effectiveness of a rig. It is against this background that the present invention has been devised.

Accordingly, the present invention resides in a fishing rig testing device comprising a plunger, a water reservoir having an open end for the ingress and egress of water, and a plasticised moulding at the open end of the water reservoir.

It will be appreciated that the plunger takes a standard form and so has a handle attached to one end of a shaft and a plate at the opposite end of the shaft. The plate is dimensioned to fit snugly inside the water reservoir. The shaft may be a straight rod of any suitable cross-sectional shape or may be cross-shaped in cross-section.

The water reservoir is a substantially cylindrical tube having a first, closed end through which the shaft of the plunger passes and a second, open end opposite the closed end. When the plunger is inserted into the water reservoir, the resulting device acts like a syringe such that pulling the plunger by the handle away from the open end of the reservoir pulls water into the reservoir and pushing the handle of the plunger towards the open end of the water reservoir expels any water held in the reservoir.

The water reservoir may be made from any suitable material. However, a light weight, cheap and sufficiently strong plastic such as acrylic is preferred.

The water reservoir is ideally dimensioned to fit comfortably in the hand as well as providing sufficient water capacity substantially to mimic the water intake and expulsion of a fish feeding. A tube length of between 230 mm and 260 mm has been found to be ideal, with the preferred length being about 245 mm. An internal diameter of between about 40 to 50 mm has been found to be sufficient, with a preferred inner diameter being about 46 mm being particularly suitable.

In a preferred embodiment, at least a portion of the length of the water reservoir is see-through. This enables the user to see how the rig under test is performing within the testing device. Ideally, the see-through portion is located at or near the open end of the water reservoir. A see-through portion extending 70mm from the open end of the reservoir towards the closed end has been found to be particularly preferred. It will be appreciated that the see-through portion may be either the entire circumference of the water reservoir or a (closed) window in the wall of the reservoir.

In one embodiment, the see-through portion is made from a polarised material to reduce glare from the water within the reservoir thereby enhancing visibility within the reservoir.

The plasticised moulding at the opening of the water reservoir is preferably designed and shaped to mimic the lips and mouth of a fish, such as a carp. In its simplest embodiment, the plasticised moulding may be a ring of silicone. In an alternative embodiment, the plasticised moulding is shaped from a plasticised material, such as silicone or thermo plastic rubber (TPR). It will be appreciated that any suitable material may be used, provided it is sufficiently soft to be pierced by a fishing hook.

We know that the mouths of fish vary from lake to lake, mainly due to the different types of lake bed, i.e. predominantly silty/sandy textured bottom lakes would (in general) harbour a much softer mouthed carp, for example, whereas carp from gravely / stony bedded lakes would yield fish with a harder mouth skin. Carp do by nature of their feeding process inhale and exhale the detritus and bottom substance of the lake bed, so prolonged exposure to sharp stony contact during feeding leads to a tougher skinned fish, no different than comparing manual labourers' hands to those of an office based employee. In addition to this, carp found in warmer climates can also be found to have softer mouths than those from colder climates. Accordingly, a Shore Hardness in the range of between about 10A and 30A is preferred depending on the embodiment. For example, a Shore hardness of between 15A and 25A is believed to be suitable for carp fishing.

Ideally, the plasticised moulding is substantially circular in cross section. In one embodiment, part of the circumference of the moulding may be flattened, preferably a lower part in use. In either embodiment, the circumference may include a thickened or, in use, raised portion to mimic the inside of the lower jaw of a fish.

It will be appreciated that, in use, the end of the plasticised moulding that is distal to the water reservoir and handle is dimensioned to provide a snug fit over the outer circumference of the water reservoir.

The plasticised moulding may be shaped to extend from the water reservoir having a length in the same plane. Alternatively, the circumference of the moulding may flare from the distal to the proximal end such that the circumference of the moulding is larger at the end proximal to the water reservoir compared to the circumference of the open end of the water reservoir. In a further alternative or in addition, the moulding may be shaped with an angle either downwards or upwards from the horizontal plane of the water reservoir.

In its simplest form, the plasticised moulding is a substantially circular ring or band, having a length from distal to proximal end of between about 1 mm and 25 mm. In one embodiment the length is approximately 10 mm. In an alternative embodiment the length is graduated and increases from distal to proximal end from about 10 mm to about 20 mm so that, when viewed from the side, the moulding has an upper proximal edge that overhangs a lower proximal edge by about 10 mm, to mimic the top lip overhang of a fish's mouth.

Preferably, the plasticised moulding is a moulded, removable attachment to the open end of the water reservoir. The removable attachment may be attachable to the open end of the reservoir by a push fit, a snap fit or by way of a mating thread.

The fishing rig testing device may further include an outer cover that encases at least part of the water reservoir. Ideally the outer cover is substantially elliptical in cross-section to provide a comfortable shape to hold. The outer cover may include surface pattern to enhance grip, particularly when the device is in use and wet.

In a yet further embodiment, the fishing rig testing device may further include means to enable automated pumping/movement of the plunger, thereby freeing up a hand. In use, a fishing rig to be tested is placed inside the open end of the water reservoir so that the fishing line extends out from the device. The water reservoir is held in one hand while the plunger handle is grasped with the other hand. Water is flushed in and out of the device via the plasticised moulding by manually moving the plunger in and out of the water reservoir to generate a pumping action. In this way, the angler can experiment to see if a hook within a rig will catch the lip of the fish. The see-through inspection window allows the user to gain an insight into how the rig is likely to act inside a fish's mouth.

The device shows anglers how effectively their rig will hook into the lip of a fish under conditions when a fish inhales and exhales the rig. Anglers may use it to experiment with their 'rigs' and then refine the design of their rig to assist in catching more fish.

The present invention also encompasses a kit of parts comprising a plunger, a water reservoir and at least one plasticised moulding as described herein above. Ideally the plasticised moulding is mountable on the open end of the water reservoir.

Particularly preferred is a kit comprising more than one plasticised moulding in which each plasticised moulding has a different shape. Also preferred is a kit in which each plasticised moulding has a different Shore Hardness. Further preferred is a kit in which each plasticised moulding has a different diameter.

The present invention will now be described in detail by way of example as illustrated in the accompanying figures, in which:

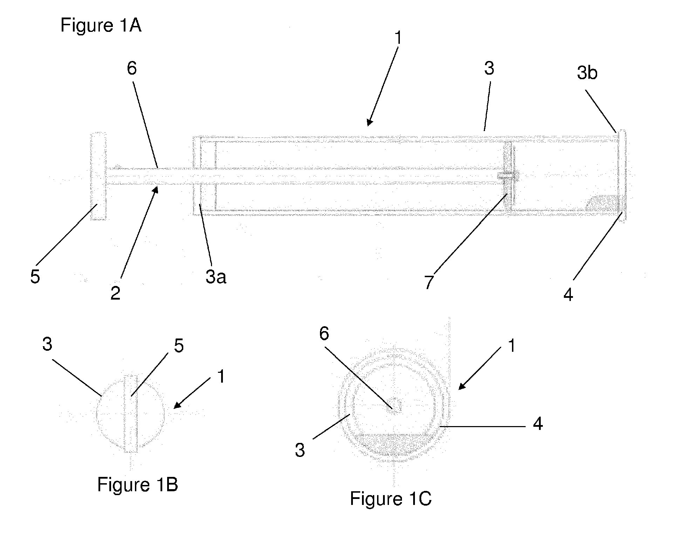

Figure 1 illustrates the fishing rig testing device of the present invention in its simplest form, in which Figure 1A is a longitudinal cross-sectional view through the device, Figure 1B is an end-on view from the closed end of the water reservoir and Figure 1C is an end-on view from the opposite, open end;

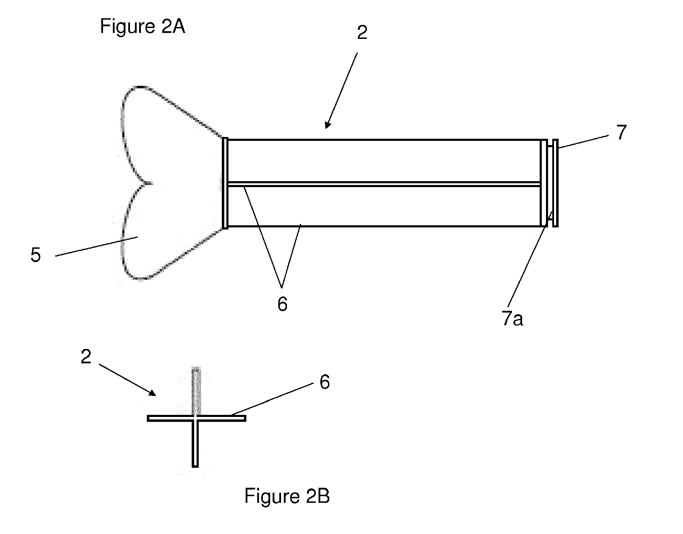

Figure 2 illustrates an alternative plunger in which the handle is shaped like a fish tail fin and the shaft has a cross-shape in cross-section, in which Figure 2A is a side view of the plunger and Figure 2B is a cross-section view of the shaft;

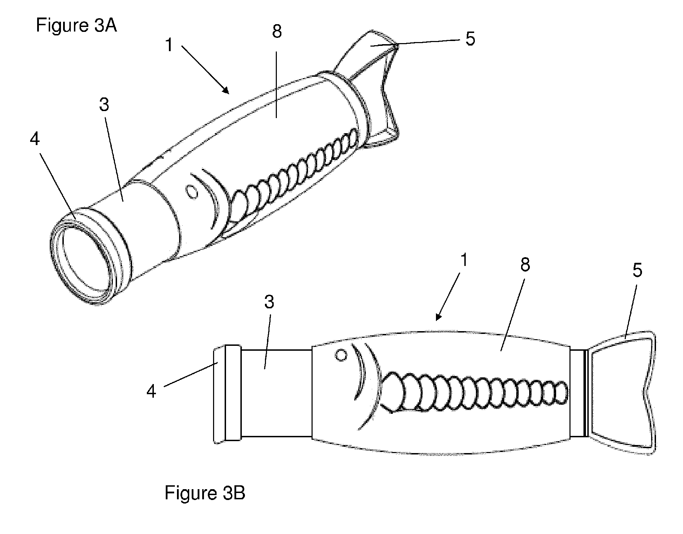

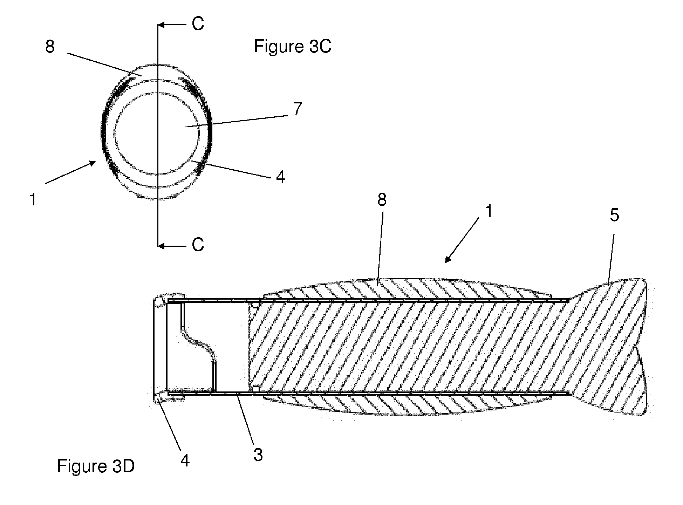

Figure 3 illustrates an alternative embodiment of the fishing rig testing device of the present invention in which Figure 3A is a perspective view of the device from the open end, Figure 3B is a side view of the device, Figure 3C is an end-on view from the open end and Figure 3D is a vertical cross-section view through line C-C of Figure 3C;

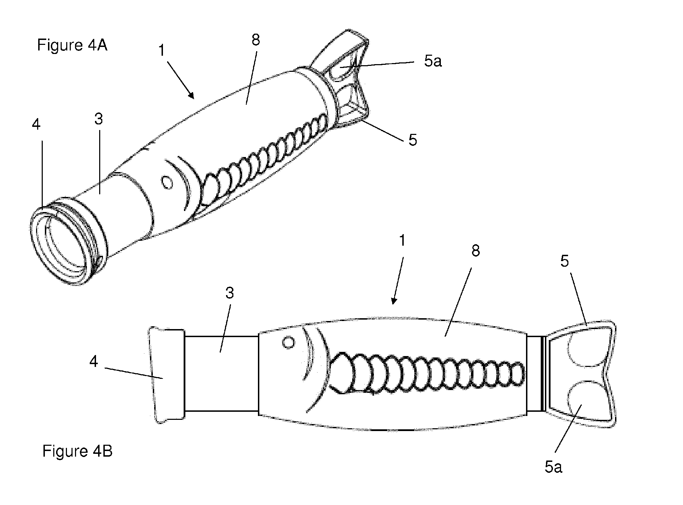

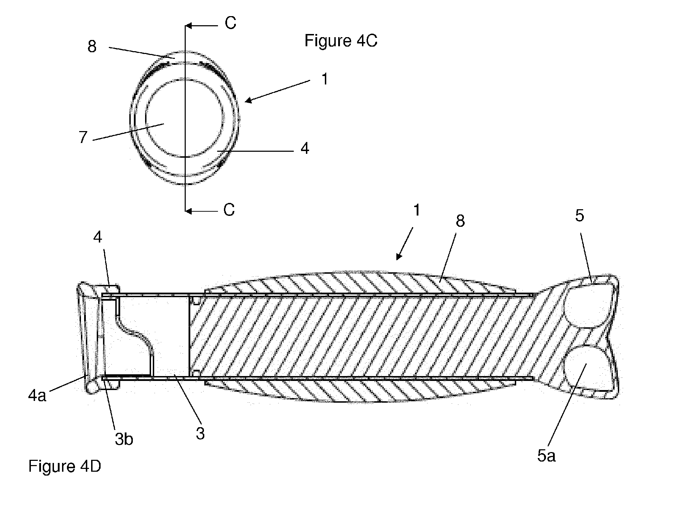

Figure 4 illustrates an alternative embodiment of the fishing rig testing device of the present invention in which Figure 4A is a perspective view of the device from the open end, Figure 4B is a side view of the device, Figure 4C is an end-on view from the open end, and Figure 4D is a vertical cross-section view through line C-C of Figure 4C;

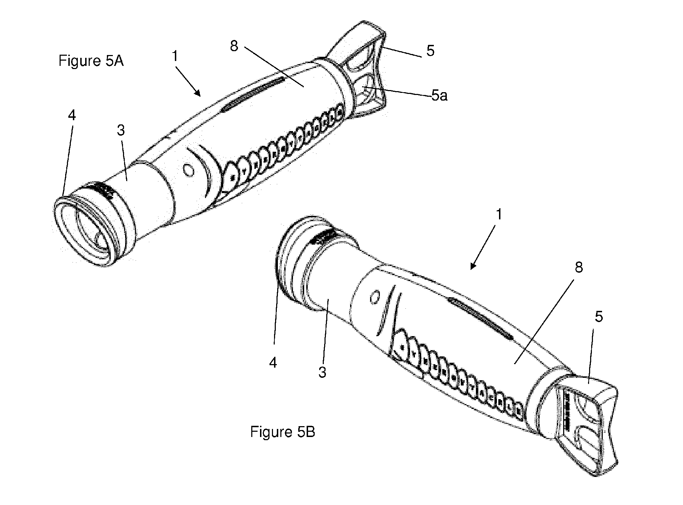

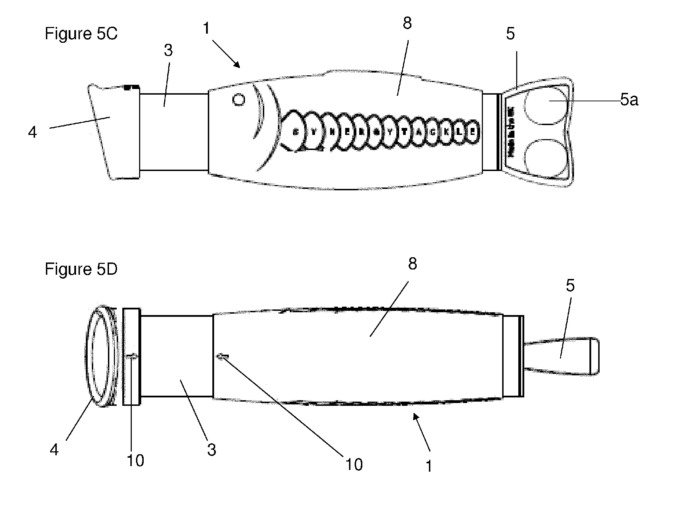

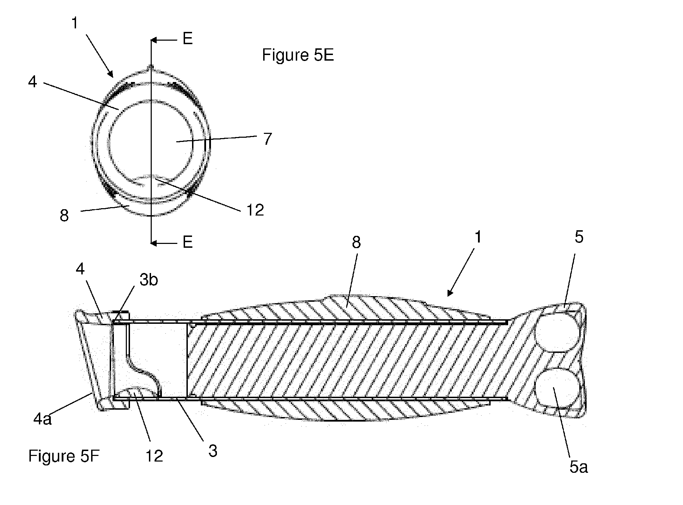

Figure 5 illustrates an alternative embodiment of the fishing rig testing device of the present invention in which Figure 5A is a perspective view of the device from the open end, Figure 5B is a perspective view of the device from the plunger end, Figure 5C is a side view of the device, Figure 5D is a view from underneath the device, in use; Figure 5E is an end-on view from the open end, and Figure 5F is a vertical cross-section view through line E-E of Figure 5E; and

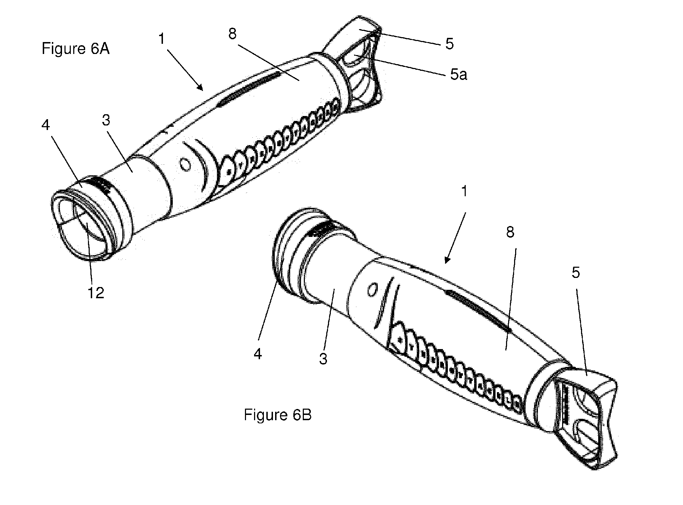

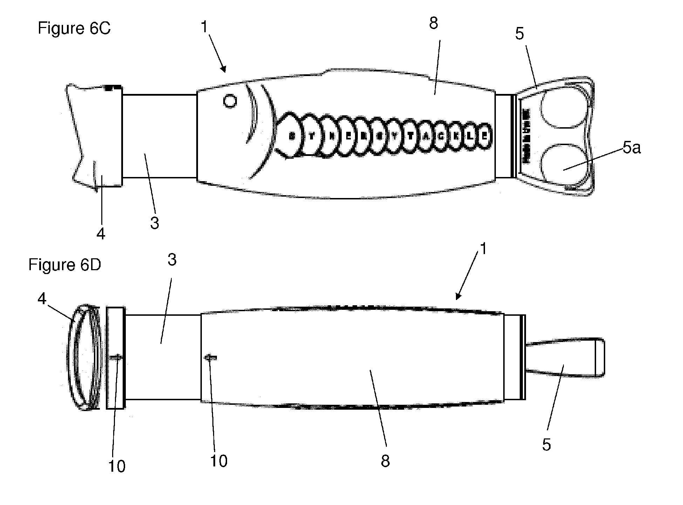

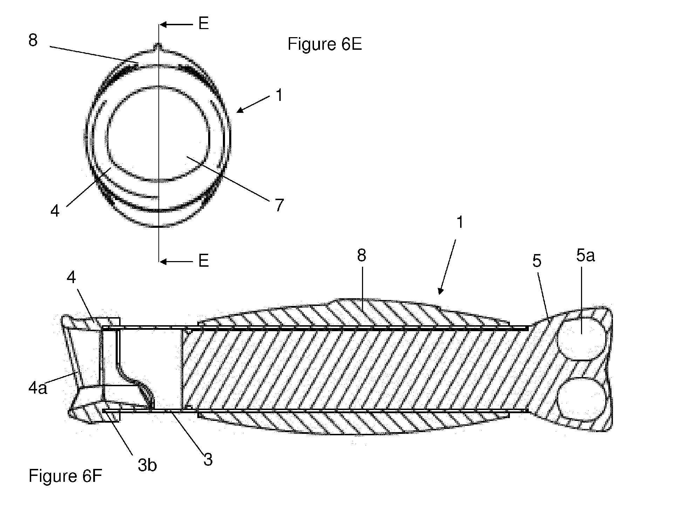

Figure 6 illustrates an alternative embodiment of the fishing rig testing device of the present invention in which Figure 6A is a perspective view of the device from the open end, Figure 6B is a perspective view of the device from the plunger end, Figure 6C is a side view of the device, Figure 6D is a view from underneath the device, in use; Figure 6E is an end-on view from the open end, and Figure 6F is a vertical cross-section view through line E-E of Figure 6E.

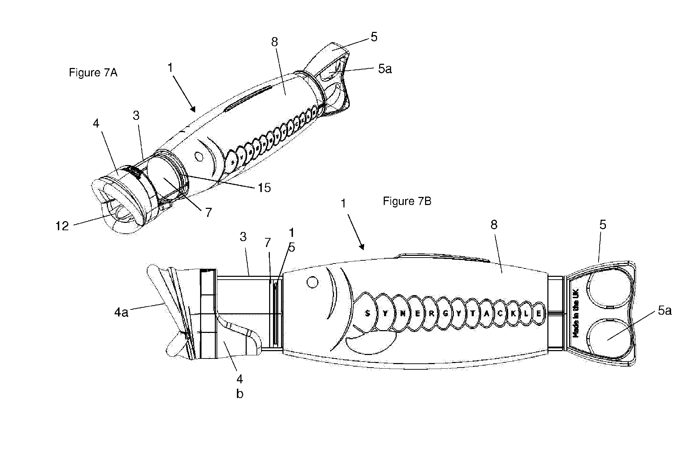

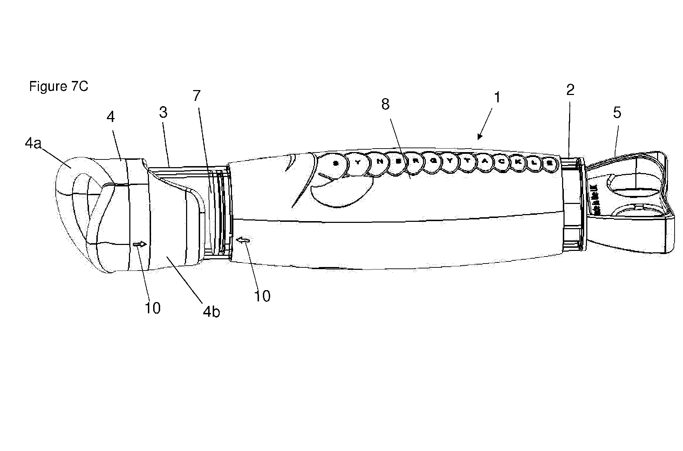

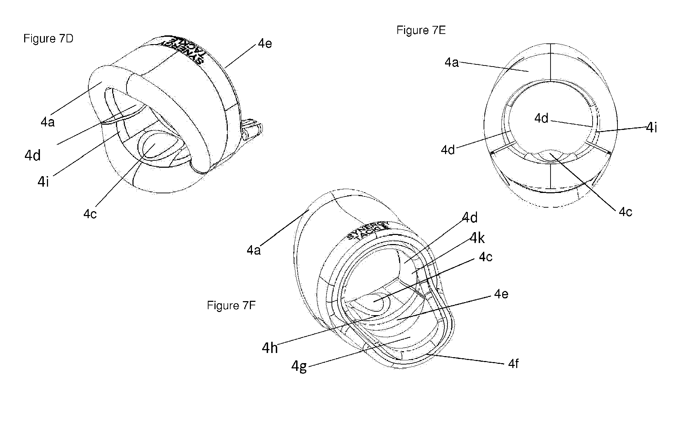

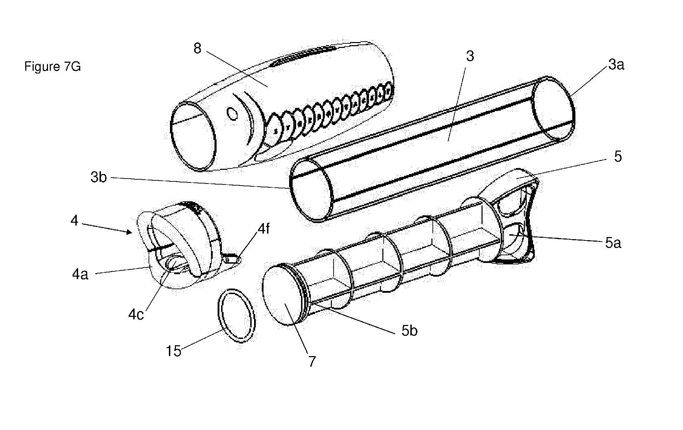

Figure 7 illustrates an alternative embodiment of the fishing rig testing device of the present invention in which Figure 7A is a perspective view of the device from the open end, Figure 7B is a side view of the device, Figure 7C is a perspective view from underneath the device, in use, Figure 7D illustrates the mouth part of the device in a perspective view from the open end of the device; Figure 7E is an end on view of the mouth part viewed from the open end, and Figure 7F is a perspective view of the mouth part viewed from the end that mates with the remainder of the device.
Figure 7G is an exploded view of the device of Figures 7A to 7C.

As illustrated in Figure 1, the fishing rig testing device 1 of the present invention is essentially a syringe with a plunger 2 and a reservoir 3. The plunger 2 has a handle 5 at one end of a shaft 6. Shaft 6 is a rod having a length that enables substantially all the contents of the reservoir 3 to be dispelled when the handle 5 is pushed towards the reservoir 3. A plate 7 at the shaft end opposite to the handle 5 acts to create suction to pull water into the reservoir 3 and push the water out as the handle 5 is moved towards and away from the reservoir 3. As can be seen from Figure 1A, the plate 7 is dimensioned to provide a snug fit within the reservoir 3. In this particular example, plate 7 is a rubber disc.

The reservoir 3 is substantially tubular in shape and has a closed end 3a against which the handle 5 of the plunger 2 abuts. The plasticised moulded body 8 has a scaled pattern etched into its surface giving a textured surface that provides the user with additional grip when the body 8 becomes wet. The opposite end 3b of the reservoir is open to allow the ingress and egress of water. The reservoir 3 is a clear plastic tube to enable the user to view events occurring inside the device 2 as water is pulled in and expelled from the device 1 by way of suction from the plunger 2.

Around the outer circumference of the open end 3b of the reservoir 3 is a plasticised moulding 4. In this example, the plasticised moulding 4 is a silicon band.

Figure 2 illustrates an alternative embodiment for the plunger 2 in which the handle 5 is shaped to resemble the tail fins of a fish. Instead of being a rod, the shaft 6 is a cross-shape when viewed in cross-section. Such a shape provides extra rigidity and strength to the plunger 2. The plate 7 includes a recess 7a to house a rubber washer to provide a suitable seal with the inside wall of the reservoir 3 and substantially prevent water seeping around the plate 7 and into the plunger 2.

Figure 3 illustrates a more ergonomic embodiment of the device 1 in which the device 1 includes an outer cover 8 that fits over reservoir 3 and extends in length from the plunger handle 5 along about three quarters of the reservoir. The cover 8 is essentially elliptical in shape to provide a grip that is easily and comfortably held, particularly when the device 1 is wet. The cover may include surface pattern to enhance grip, as well as branding.

Since reservoir 3 is made from a see-through material, this enables the user to concentrate on events occurring within the opening of the device 1 as water is pulled in and expelled by the plunger 2.

Handle 5 of the plunger 2 still resembles the tail fin of a fish but the shape is moulded to enhance purchase and grip on the handle.

It will be seen from Figures 3B and 3D that the plasticised moulding 4 extends away from the reservoir 3 and is angled downwards from the horizontal plane of the device to mimic the bottom feeding shape of a fish's mouth.

Figure 4 illustrates an alternative embodiment of the device 1 of the present invention in which plunger handle 5 now includes finger holes 5a to assist with ergonomic and effective use of the handle 5, particularly when the device 1 is wet.

The plasticised moulding 4 has also been modified. Firstly, the plasticised moulding 4 extends away from the open end 3b of the reservoir 3 by 10 mm to mimic ore accurately the mouth of the fish as it grazes. The proximal end 4a of the plasticised moulding 4 also flares marginally and extends both upwards and downwards from the horizontal plane of the device 1.

Figure 5 illustrates a yet further embodiment of the device 1. In particular and as shown in Figure 5C, the proximal end 4a of the plasticised moulding 4 is angled so that the upper part of the moulding extends further from the open end 3b of the reservoir 3 compared to the lower part.

In addition and as illustrated in Figure 5D, location arrows 10 are provided on the underside of both the cover 8 and plasticised moulding 4 to ensure that the plasticised moulding 4 is correctly aligned for optimum use. Location arrows 10 are of particular use when the plasticised moulding 4 is removable from the device 1.

In addition and as illustrated in Figure 5E, the open end 3b of the reservoir includes a raised portion 12 located at the bottom of the circumference, in use. The raised portion 12 is part of the plasticised moulding 4, extending from the proximal end 4a into the reservoir 3 and is essentially concave in shape to mimic the raised base of a fish's mouth.

Figure 6 illustrates a further adaptation of the plasticised moulding 4. In particular and as illustrated in Figures 6C-6F, the proximal end 4a of the plasticised moulding 4 is angled upwards from the horizontal plane of the device 1 and the upper part (in use) of the plasticised moulding 4 circumference extends away from the open end 3b of the reservoir 3 further than the lower part. The opening of the plasticised moulding 4 is slightly flattened in the lower part, to mimic more closely the shape of the mouth of a carp.

Raised portion 12 is included at the bottom of the circumference but has a convex shape.

Figure 7 illustrates a yet further embodiment of the plasticised moulding 4. The moulding 4 is shown separated from the rest of the device 1. As illustrated in Figures 7A-7F, the proximal end 4a of the plasticised moulding 4 is angled upwards from the horizontal plane of the device 1 and the upper part (in use) of the plasticised moulding 4 circumference extends away from the open end 3b of the reservoir 3 further than the lower part. In this embodiment, the opening plasticised moulding 4 has three adaptations compared to the embodiment illustrated in Figure 6 to mimic more closely the shape of the mouth of a carp. As shown in Figure 7D, the first adaptation is an area 4c that is raised slightly by 10-25 mm in the lower part (in use) to model the internal shape of a carp's mouth. Figure 7E shows the second adaptation in which the internal circumference of the plasticised moulding 4 flares from the narrow point to the wider point 4i to imitate the internal cheeks of carp's mouth when the mouth is open. The opening widens from 4d to the open end and the opening increases from the end 4d that attaches to the open end 3a of the reservoir 3, where the moulding circumference is at its smallest, towards the end 4a that is proximal to the reservoir 3 to mirror the internal shape of the mouth of a carp In the third adaptation, as depicted in Figure 7F, the gradient of the lower curvature of the inside of the moulding 4 (in use), indicated at 4e, rises as a step from distal end 4f to meet the base of the slight raised area 4c to imitate the transition from the throat of a carp as it meets the mouth part. This feature ensures a lifelike movement of water within the mouth of the device..

Figure 7G is an exploded view of the embodiment described above and shows the components parts of the device 1.

The cover 8 is a snug fit around the reservoir 3 to form a component that mimics the body of a fish, such as a carp. In this and previous embodiments, the reservoir is constructed from clear plastic so enable the user to view the action of a particular rig to ascertain whether or not it will be appropriate for the fish that the using is aiming to catch.

The plasticised moulding 4, mimicking the mouth of a carp in this embodiment, is attached to the open end 3b of the reservoir 3. The plasticised washer 15 is fitted into groove 5b on plate 7 of the plunger 5 to complete the plunger component. The plunger component is then inserted into the open end 31 of the reservoir 3 to complete device 1.

It will be appreciated that the present invention encompasses changes and alterations to the shape of the device 1, particularly the plasticised moulding 4 to mimic and represent the shape of a mouth of a particular breed of fish and the way such a fish feeds. For example, the diameter of the plasticised moulding 4 could be enlarged to accommodate the European market where the climate leads fish to grow larger.

While the present device has been designed and adapted for economical production, particularly injection moulding, it will be appreciated that different materials may be added, for example to enhance to comfort and grip of the plunger handle.

Alternatively or in addition, the manual plunger may be adapted to include means that enable the automation of the plunging activity. In this way, the user gains a free hand and is able to concentrate on events occurring with the rig under test within the device.

## Claims

1. A fishing rig testing device comprising a plunger, a water reservoir having an open end for the ingress and egress of water, and a plasticised moulding at the open end of the water reservoir, wherein the water reservoir is a substantially cylindrical tube having a first, closed end through which the shaft of the plunger passes and a second, open end opposite the closed end.

2. The fishing rig testing device of Claim 1, wherein at least a portion of the water reservoir is see-through and the see-through portion is located at or near the open end of the water reservoir.

3. The fishing rig testing device of Claim 2, wherein the see-through portion is either the entire circumference of the water reservoir or a (closed) window in the wall of the reservoir.

4. The fishing rig testing device of Claim2 or Claim 3, wherein the see-through portion is made from a polarised material.

5. The fishing rig testing device of any one of Claims 4, wherein the plasticised moulding at the opening of the water reservoir is shaped to mimic the lips and mouth of a fish.

6. The fishing rig testing device of any one of Claims 1 to 5, wherein the plasticised moulding has a Shore Hardness in the range of between about 10A to 30A.

7. The fishing rig testing device of any one of Claims 1 to 6, wherein the plasticised moulding is substantially circular in cross section.

8. The fishing rig testing device of Claim 7, wherein part of the circumference of the plasticised moulding is flattened.

9. The fishing rig testing device of Claim 7 or Claim 8, wherein the circumference of the plasticised moulding may include a thickened or raised portion.

10. The fishing rig testing device of any one of Claims 1 to 9, wherein the end of the plasticised moulding that is distal to the water reservoir and handle is dimensioned to provide a snug fit over the outer circumference of the water reservoir.

11. The fishing rig testing device of any one of Claims 1 to 10, wherein the plasticised moulding is shaped to extend from the water reservoir having a length in the same plane.

12. The fishing rig testing device of Claim 10 or Claim 11, wherein the circumference of the plasticised moulding flares from the distal to the proximal end such that the circumference of the moulding is larger at the end proximal to the water reservoir compared to the circumference of the open end of the water reservoir.

13. The fishing rig testing device of any one of Claims 1 to 12, wherein the plasticised moulding is shaped with an angle either downwards and/or upwards from the horizontal plane of the water reservoir.

14. The fishing rig testing device of any one of Claims 1 to 13, wherein the plasticised moulding has a length, from distal to proximal end, of between about 1 mm and 25 mm.

15. The fishing rig testing device of any one of Claims 1 to 14, wherein the plasticised moulding has an angled proximal end such that an upper proximal edge overhangs a lower proximal edge, preferably by about 10 mm.

16. The fishing rig testing device of any one of Claims 1 to 15, wherein the plasticised moulding is a moulded, removable attachment to the open end of the water reservoir.

17. The fishing rig testing device of Claim 16, wherein the plasticised moulding is attachable to the open end of the reservoir by a push fit, a snap fit or by way of a mating thread.

18. The fishing rig testing device of any one of Claims 1 to 17, wherein the fishing rig testing device further includes an outer cover that encases at least part of the water reservoir.

19. The fishing rig testing device of any one of Claims 1 to 18, wherein the fishing rig testing device further includes means to enable automated pumping/movement of the plunger.

20. A kit of parts for a fishing rig testing device as claimed in any one of Claims 1 to 19, comprising a plunger, a water reservoir and at least one plasticised moulding.
